Europäisches Patentamt

European Patent Office

Office européen des brevets

(11) Veröffentlichungsnummer: **0 498 060 B1**

(12) **EUROPÄISCHE PATENTSCHRIFT**

(45) Veröffentlichungstag der Patentschrift: **30.08.95**

(51) Int. Cl.6: **C08L  67/06**, C08F 299/04, C08J 5/04, C08K 7/02

(21) Anmeldenummer: **91120891.6**

(22) Anmeldetag: **05.12.91**

(54) **Naturfasern enthaltende Formmassen auf Basis von ungesättigten Polyesterharzen und daraus erhaltene Formkörper.**

(30) Priorität: **02.02.91 DE 4103212**
      **20.09.91 DE 4131337**

(43) Veröffentlichungstag der Anmeldung:
      **12.08.92 Patentblatt  92/33**

(45) Bekanntmachung des Hinweises auf die Patenterteilung:
      **30.08.95 Patentblatt  95/35**

(84) Benannte Vertragsstaaten:
      **AT BE CH DE FR GB IT LI NL SE**

(56) Entgegenhaltungen:
      EP-A- 0 134 513
      FR-A- 1 253 869
      GB-A- 1 443 519
      GB-A- 2 103 639
      US-A- 3 246 054

      DATENBANK CHEMICAL ABSTRACTS, (HOST:STN), 1969, n CA73(4):15342U, COLUMBUS, OHIO, US; YUAN, HONG-CHIEN ET AL.: "GAMMA-RAY INDUCED POLY MERIZATION OF UNSATURATED POLYESTER IN RED MUD" , & LARGE RADIAT. SOURCES IND. PROCESSES, PROC. SYM. UTIL. LARGE RA-

DIAT. SOURCES ACCEL. IND. PROCESS., 383-97,

(73) Patentinhaber: **HÜLS AKTIENGESELLSCHAFT**

      **D-45764 Marl (DE)**

(72) Erfinder: **Krämer, Horst, Dr.**
      **Greifenberger Strasse 3**
      **W-4370 Marl (DE)**
      Erfinder: **Stawowy, Johannes**
      **Jupiterweg 32**
      **W-4370 Marl (DE)**

**Beschreibung**

Formmassen entsprechend dem Oberbegriff des Patentanspruchs 1 und daraus durch Heißpressen erhaltene Formkörper, d. h. naturfaserverstärkte UP-Harz-Formteile, sind seit langem bekannt. Seit Jahren werden für die Automobilindustrie jutefaserverstärkte Formteile aus UP-Harzen in Verbindung mit Jutematten (Massenverhältnis Jute/Harz vorwiegend = 1/1) im Heißpreßverfahren hergestellt. Sie werden zu PKW-Innenverkleidungsteilen weiterverarbeitet. Das beim Heißpressen erhaltene, gehärtete Material gilt als hochwertiger Konstruktionswerkstoff.

Naturfasern, wie Jute, Sisal und Flachs, weisen ein hohes Wasseraufnahmevermögen auf. Sie müssen daher vor der Verarbeitung getrocknet werden. Nach der Trocknung verbleibt ein mehr oder weniger hoher Restwassergehalt, der sich inhibierend auf die beim Heißpressen stattfindende, radikalische Polymerisation des Styrols auswirkt. Jutefaserverstärkte Formteile weisen in der Praxis einen Reststyrolgehalt von 0,4 bis 1,2 Massen-% auf. Sie haben daher einen mehr oder weniger starken Styrolgeruch. Zur Beseitigung dieses Nachteils sind schon verschiedene Versuche unternommen worden. Durch verfahrenstechnische Maßnahmen, wie Variation der UP-Harze, der Polymerisationsinitiatoren für die radikalische Polymerisation und der Temperaturführung beim Heißpressen sowie die sorgfältige Trocknung der Jutematten, ist es bisher jedoch nicht gelungen, zuverlässig Formteile mit einem Reststyrolgehalt von < 0,5 Massen-% herzustellen.

Das verschärfte Umweltbewußtsein und die drastische Herabsetzung des MAK-Wertes für Styrol im Jahre 1987 von bisher 100 ppm auf 20 ppm führten zur Forderung der Automobilhersteller an die Formteilhersteller, juteverstärkte Formteile mit einem Reststyrolgehalt von < 0,1 Massen-% bereitzustellen.

Eigene Versuche, welche den vollständigen oder teilweisen Ersatz des Styrols in den Formmassen durch Diallylphthalat zum Gegenstand hatten, führten nicht zum gewünschten Erfolg. Im ersten Fall wiesen die Harze eine zu hohe Viskosität auf, so daß eine hinreichende Imprägnierung der Jutematten nicht möglich war. Außerdem waren, bedingt durch den vergleichsweise trägen Reaktionsablauf, die Standzeiten beim Heißpressen zu lang. Im zweiten Fall wurden mit einer repräsentativen Harzzusammensetzung aus 52 Massenteilen eines ungesättigten Polyesters, 20 Massenteilen Styrol und 28 Massenteilen Diallylphthalat eine hinreichend niedrige Harzviskosität, eine hinreichend kurze Standzeit beim Heißpressen, eine gute Oberflächenqualität und gute mechanische Festigkeiten der Formteile sowie ein Reststyrolgehalt der Formteile von < 0,1 Massen-% erreicht. Die Formteile wiesen jedoch einen Restgehalt an Diallylphthalat von 4 bis 8 Massen-%, bestimmt durch gaschromatografische Analyse, auf. Selbst mit ausgesuchten Polymerisationsinitiatoren konnte der Restmonomergehalt nicht wesentlich herabgesetzt werden. Die Formteile sind für den Praxiseinsatz ungeeignet, da daraus hergestellte PKW-Innenverkleidungsteile zum Fogging, d. h. zur Bildung eines Belages auf den Innenseiten der Scheiben des Fahrgastraumes, führen würden.

Der Stand der Technik ist beschrieben in GB-A-1 443 519, GB-A-2 103 639 und EP-A-134 513.

Die Aufgabe der Erfindung besteht darin, Naturfasern enthaltende Formmassen auf Basis von ungesättigten Polyesterharzen bereitzustellen, welche die geschilderten Mängel überwinden und aus denen durch Heißpressen zuverlässig Formteile erhalten werden können, welche einen Reststyrolgehalt von < 0,1 Massen-% aufweisen.

Die Aufgabe wurde in überraschender Weise wie in den Patentansprüchen angegeben gelöst.

Gegenstand der Erfindung ist somit eine Formmasse, welche aus einem ungesättigten Polyester, einem Gemisch aus, bezogen auf das Gemisch, 1 bis 85, vorzugsweise 3 bis < 30 Massen-% Styrol und 15 bis 99, vorzugsweise > 70 bis 97 Massen-% eines Di(meth)acrylsäureesters eines $C_2$- bis $C_9$-(cyclo)-aliphatischen Diols, Naturfasern und üblichen Zusatzstoffen besteht.

Die Diolkomponente kann eine oder mehrere Ethergruppen aufweisen. Geeignete Diolkomponenten sind beispielsweise 1,4-Cyclohexandimethanol, Diethylenglykol und Tripropylenglykol. Besonders geeignet ist Butandiol-1,4. Vorzugsweise ist der Diester ein Dimethacrylsäureester eines $C_3$- bis $C_6$-aliphatischen Diols.

Als ungesättigter Polyester kann ein üblicher ungesättigter Polyester auf Basis von Maleinsäureanhydrid, Phthalsäureanhydrid, Diethylenglykol und 1,2-Propylenglykol eingesetzt werden. Seine Lösung in dem erfindungsgemäßen Styrol/Diester-Gemisch, d. h. das UP-Harz, weist eine für die Imprägnierung der Naturfasern günstige niedrige Viskosität auf. Dabei ist der Gehalt des ungesättigten Polyesters, bezogen auf das Harz, im allgemeinen 40 bis 70 Massen-%.

Die Naturfasern können als Stapelfasern vorliegen. Sie liegen vorzugsweise als Matten vor. Bevorzugt sind Jutematten. Ein typisches Massenverhältnis Jute/Harz ist 1/1. Davon kann im Einzelfall nach oben oder unten abgewichen werden.

Als übliche Zusatzstoffe sind an erster Stelle Polymerisationsinitiatoren für die radikalische Polymerisation bei erhöhter Temperatur, welche auch als Härtungsmittel bezeichnet werden, zu nennen. Als solche sind vor allem Peroxide geeignet, wie beispielsweise Tertiärbutylperbenzoat, Tertiärbutylperoctoat und Myristilpercarbonat. Die Zerfalltemperatur der Härtungsmittel ist der Härtungstemperatur, d. h. der Werkzeugtemperatur, anzupassen. Als weitere Zusatzstoffe können Füllstoffe wie Kreide, Glasfasern und Kunstfasern sowie Inhibitoren wie Tertiärbutylbrenzcatechin und Ditertiärbutylkresol eingesetzt werden.

Mit den Formmassen der Erfindung gelingt es zuverlässig, durch Heißpressen Formteile mit einem Reststyrolgehalt von < 0,1, insbesondere < 0,01 Massen-% und einem Restdiestergehalt von < 0,05 Massen-% herzustellen. Sie haben keinen störenden Geruch. Sie weisen eine gute Oberflächenqualität und gute mechanische Festigkeiten auf.

Die Erfindung wird durch die folgenden Beispiele erläutert. Darin bedeuten Teile (T.) Massenteile und Prozent (%) Massenprozent. Die nicht erfindungsgemäßen Vergleichsbeispiele werden mit großen Buchstaben bezeichnet.

Es wurde ein ungesättigter Polyester (UP) eingesetzt, der erhalten wurde aus (in Mol):

| | |
|---|---|
| Maleinsäureanhydrid | 3,0 |
| Phthalsäureanhydrid | 1,0 |
| Diethylenglykol | 1,4 |
| 1,2-Propylenglykol | 3,0 |

Beispiele A bis C und 1 bis 6

Der ungesättigte Polyester wurde in Styrol oder einem Gemisch aus Styrol und 1,4-Butandioldimethacrylat (1,4-BDDMA) entsprechend den Angaben in der folgenden Tabelle 1 gelöst. Die Viskosität der so erhaltenen UP-Harze wurde nach DIN 53 211 bestimmt, d. h. sie wurde mit dem Auslaufbecher 4 bei 25 °C bestimmt und ist als Auslaufzeit in Sekunden angegeben. Jeweils 100 Teile der UP-Harze wurden mit 1,0 Teil Tertiärbutylperbenzoat und 0,5 Teilen Tertiärbutylperoctoat gemischt. Jutematten, welche auf einen Restwassergehalt von < 4 % getrocknet waren, wurden mit den Harzen getränkt (Massenverhältnis Harz/Jute = 1:1) und in ein Preßwerkzeug eingelegt. Bei einer Werkzeugtemperatur von 135 °C und einer Preßzeit von 55 s im Falle der Beispiele A und B und von 45 s im Falle der Beispiele C und 1 bis 6 wurden Preßplatten erhalten. Proben der Platten wurden auf < 5 mm Kantenlänge zerkleinert, während 12 h in Aceton bei Raumtemperatur aufbewahrt und zum Schluß gut durchgeschüttelt. In den Extrakten wurden Styrol und 1,4-BDDMA gaschromatografisch bestimmt. Die Ergebnisse sind in der Tabelle 1 angegeben.

Es ist deutlich zu erkennen, daß die erfindungsgemäßen Preßplatten den Anforderungen hinsichtlich des Reststyrolgehaltes entsprechen, die Vergleichspreßplatten dagegen nicht. Die erfindungsgemäßen Preßplatten weisen einen sehr niedrigen Restdiestergehalt auf.

3

Tabelle 1: UP-Harze und daraus erhaltene Preßplatten
Beispiele A bis C und 1 bis 6

| | A | B | C | 1 | 2 | 3 | 4 | 5 | 6 |
|---|---|---|---|---|---|---|---|---|---|
| Styrol, T. | 37 | 40 | 35 | 16 | 17 | 22,5 | 30 | 30 | 33 |
| 1,4-BDDMA, T.(%*) | - | - | 5 (12,5) | 20 (56) | 15 (47) | 10 (31) | 10 (25) | 15 (33) | 10 (23) |
| UP, T. | 63 | 60 | 60 | 64 | 68 | 67,5 | 60 | 55 | 57 |
| Viskosität, s | 45 | 35 | 40 | 205 | 286 | 207 | 53 | 28 | 34 |
| Reststyrol, % | 0,5 | 0,7 | 0,18 | 0,05 | 0,03 | 0,07 | 0,05 | 0,04 | 0,09 |
| Rest-1,4-BDDMA, % | - | - | < 0,05 | < 0,05 | < 0,05 | < 0,05 | < 0,05 | < 0,05 | < 0,05 |

* bezogen auf die Summe von Styrol und 1,4-BDDMA

Beispiele 7 und 8

Der ungesättigte Polyester wurde in einem Gemisch aus Styrol und 1,4-BDDMA entsprechend den Angaben in der folgenden Tabelle 2 gelöst. Im übrigen wurde wie in den voranstehenden Beispielen 1 bis 6 verfahren. Die Ergebnisse sind in der Tabelle 2 angegeben.

Es ist deutlich zu erkennen, daß die erfindungsgemäßen Preßplatten den Anforderungen hinsichtlich des Reststyrolgehaltes in hervorragender Weise entsprechen. Die Preßplatten weisen einen sehr niedrigen Restdiestergehalt auf. Bemerkenswert ist, daß die UP-Harze keinen Styrolgeruch aufweisen.

## Tabelle 2: UP-Harze und daraus erhaltene Preßplatten
### Beispiele 7 und 8

|  | 7 | 8 |
|---|---|---|
| Styrol, T. | 10 | 5 |
| 1,4-BDDMA, T.(%[*]) | 39(80) | 44(90) |
| UP, T. | 51 | 51 |
| Viskosität, s | 58 | 72 |
| Reststyrol, % | 0,002 | 0,002 |
| Rest-1,4-BDDMA, % | < 0,05 | < 0,05 |

[*] bezogen auf die Summe von Styrol und 1,4-BDDMA

## Patentansprüche

1. Für das Heißpressen geeignete Formmasse, bestehend aus einem ungesättigten Polyester, einem Gemisch aus 1 bis 85 Massen-% Styrol und 15 bis 99 Massen-% eines Di(meth)acrylsäureesters eines $C_2$- bis $C_9$-(cyclo)aliphatischen Diols, Naturfasern und Zusatzstoffen, ausgewählt aus Polymerisationsinitiatoren, Füllstoffen und Inhibitoren.

2. Formmasse nach Anspruch 1,
   dadurch gekennzeichnet,
   daß die Formmasse aus einem ungesättigten Polyester, einem Gemisch aus 3 bis < 30 Massen-% Styrol und > 70 bis 97 Massen-% eines Dimethacrylsäureesters eines $C_3$- bis $C_6$-aliphatischen Diols, Naturfasern und Zusatzstoffen, ausgewählt aus Polymerisationsinitiatoren, Füllstoffen und Inhibitoren, besteht.

3. Formmasse nach Anspruch 2,
   dadurch gekennzeichnet,
   daß der Dimethacrylsäureester des Butandiol-1,4 eingesetzt wird.

**4.** Formmasse nach einem der Ansprüche 1 bis 3,
dadurch gekennzeichnet,
daß es sich bei den Naturfasern um eine Jutematte handelt.

**Claims**

**1.** A moulding composition suitable for hot press moulding, composed of an unsaturated polyester, a mixture of 1 to 85% by mass of styrene and 15 to 99% by mass of a di(meth)acrylic acid ester of a $C_2$- to $C_9$-(cyclo)aliphatic diol, natural fibres and additives chosen from polymerization initiators, fillers and inhibitors.

**2.** A moulding composition according to claim 1, characterized in that the moulding composition is composed of an unsaturated polyester, a mixture of 3 to < 30% by mass of styrene and > 70 to 97% by mass of a dimethacrylic acid ester of a $C_3$- to $C_6$-aliphatic diol, natural fibres and additives chosen from polymerization initiators, fillers and inhibitors.

**3.** A moulding composition according to claim 2, characterized in that the dimethacrylic acid ester of butane-1,4-diol is employed.

**4.** A moulding composition according to one of claims 1 to 3, characterized in that the natural fibres are a jute mat.

**Revendications**

**1.** Mélange à mouler convenant au pressage à chaud, constitué d'un polyester insaturé, d'un mélange de 1 à 85 % en masse de styrène et de 15 à 99 % en masse d'un ester de l'acide di(méth)acrylique d'un diol (cyclo)aliphatique en $C_2$ à $C_9$, de fibres naturelles et d'additifs choisis parmi les amorceurs de polymérisation, les matières de charge et les inhibiteurs.

**2.** Mélange à mouler selon la revendication 1,
caractérisé par le fait que le mélange à mouler est constitué d'un polyester insaturé, d'un mélange de 3 à < 30 % en masse de styrène et de > 70 à 97 % en masse d'un ester de l'acide diméthacrylique d'un diol aliphatique en $C_3$ à $C_6$, de fibres naturelles et d'additifs choisis parmi les amorceurs de polymérisation, les matières de charge et les inhibiteurs.

**3.** Mélange à mouler selon la revendication 2,
caractérisé par le fait que l'on utilise l'ester de l'acide diméthacrylique du butanediol-1,4.

**4.** Mélange à mouler selon l'une des revendications 1 à 3,
caractérisé par le fait que, pour ce qui est des fibres naturelles, il s'agit d'un mat de jute.